# EUROPÄISCHE PATENTSCHRIFT

(11) **EP 1 510 384 B1**
(45) Veröffentlichungstag und Bekanntmachung des Hinweises auf die Patenterteilung: **23.09.2009**
(21) Anmeldenummer: 04010394.7
(22) Anmeldetag: 03.05.2004
(51) Int. Cl.: B60J 5/04

(54) **Aufprallschutzvorrichtung für eine Tür eines Kraftfahrzeugs**
Impact protection device for a door of a motor vehicle
Dispositif de protection pour une porte d'un véhicule automobile

(30) Priorität: 27.08.2003 DE 10339307
(43) Veröffentlichungstag der Anmeldung: 02.03.2005
(73) Patentinhaber: Dr. Ing. h.c. F. Porsche Aktiengesellschaft, 70435 Stuttgart (DE)
(72) Erfinder: Armbruster, Reiner, 75417 Muehlacker (DE); Scholz, Andre, 75446 Wiernsheim (DE); Goehrke, Martin, 74369 Löchgau (DE); Zimmer, Jens, 71272 Renningen-Malmsheim (DE); Kohler, Andreas, 75378 Bad Liebenzell (DE)

(56) Entgegenhaltungen:
- WO-A-03/059669
- DE-A1- 2 006 498
- DE-A1- 4 407 534
- FR-A1- 2 207 039
- US-A- 6 135 537
- US-B1- 6 382 707

## Beschreibung

Die Erfindung bezieht sich auf eine Aufprallschutzvorrichtung für eine Tür eines Kraftfahrzeugs nach dem Oberbegriff des Patentanspruchs 1.

Eine bekannte Türanordnung, FR 2.207.039, eines Kraftfahrzeugs umfasst zwei in eine Seitenwand eingesetzte Türen, in die Aufprallschutzvorrichtungen integriert sind. Jede Aufprallschutzvorrichtung wird durch zwei mit Abstand zueinander angeordnete Längsträger gebildet, die auf der einer Scharniersäule zugekehrten Seite mit Scharnieren versehen sind und auf der einer Schlosssäule benachbarten Seite sich mit Verlängerungen an besagter Schlosssäule abstützen. An der Schlosssäule sind Zapfen angebracht, die in Öffnungen der Verlängerungen hineinragen, dergestalt, dass bei seitlichen Belastungen der Längsträger die Verlängerungen mit den Zapfen zusammenarbeiten.

In der DE 2 006 498 wird eine Vorrichtung zum Schutz von Insassen von Kraftfahrzeugen behandelt, die in einer Tür angeordnet ist, an Stirnseiten aus besagter Tür austritt und an angrenzenden Säulen eines Aufbaus des Kraftfahrzeugs verankert ist. Diese Vorrichtung wird bspw. durch ein Seil gebildet, das über eine Kupplung mit der Säule verbunden ist.

Die WO 03/059 669 beschreibt dem Oberbegriff des Anspruchs 1.

Es ist Aufgabe der Erfindung eine Aufprallschutzvorrichtung für eine Tür zu schaffen, die bei einem Seitenaufprall durch Deformationsarbeit und Zugkraftaufnahme gezielt Stoßenergie u.a. im Bereich der Schlosssäule aufnimmt.

Nach der Erfindung wird diese Aufgabe durch die Merkmale des Patentanspruchs gelöst. Weitere, die Erfindung ausgestaltende Merkmale sind in den Unteransprüchen enthalten.

Die mit der Erfindung hauptsächlich erzielten Vorteile sind darin zu sehen, dass aufgrund der Anbringung des Schlosses an der Aufprallschutzvorrichtung und dem Eingriff des besagten Schlosses in die Deformationseinrichtung an der Säule der Aufbaustruktur die Energieaufnahme bei einem Seitenaufprall durch auf die Deformationseinrichtung wirkende Zugkräfte und ihre dadurch eingeleitete Verformarbeit optimiert wird. Dabei verbleiben das Eingriffsmittel des Schlosses und die Aufnahme an der Deformationseinrichtung bis zu einer definierten Stoßbelastung, die auf die Aufprallschutzvorrichtung einwirkt, in einer festgelegten Konstruktionslage, d.h. das Schloss wird nicht gelöst bzw. geöffnet. Die Deformationseinrichtung ist ein mit einfachen Mitteln herstellbares Bauteil und lässt sich leicht in die Aufbaustruktur integrieren. Schließlich ist die durch Konsolen und Abstützelemente gebildete Aufprallschutzvorrichtung mit vertretbaren Mitteln realisierbar und zeichnet sich durch hohe Festigkeit bei geringem Gewicht aus, wobei die Aufprallschutzvorrichtung ein vorgefertigtes Modul sein kann, das bei der Montage der Tür in das Türinnenteil einsetzbar ist.

In der Zeichnung wird ein Ausführungsbeispiel der Erfindung gezeigt, das nachstehend näher beschrieben wird.

Es zeigen
- Fig. 1: eine schematische Ansicht von oben auf eine Tür für ein Kraftfahrzeug mit der Aufprallschutzvorrichtung nach der Erfindung,

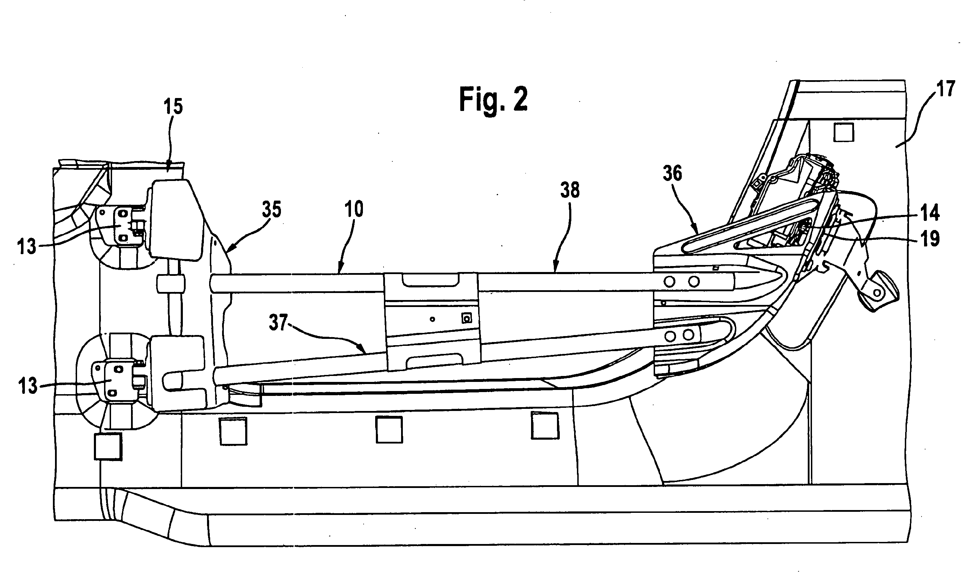

- Fig. 2: eine Ansicht in Pfeilrichtung A der Fig. 1 in größerem Maßstab,

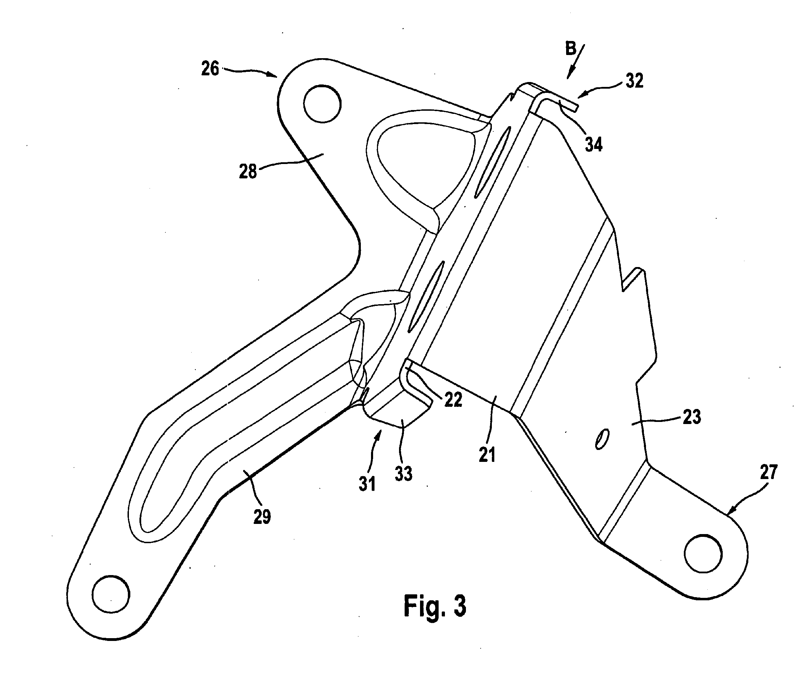

- Fig. 3: eine Einzelheit X der Fig. 2 in größerem Maßstab,

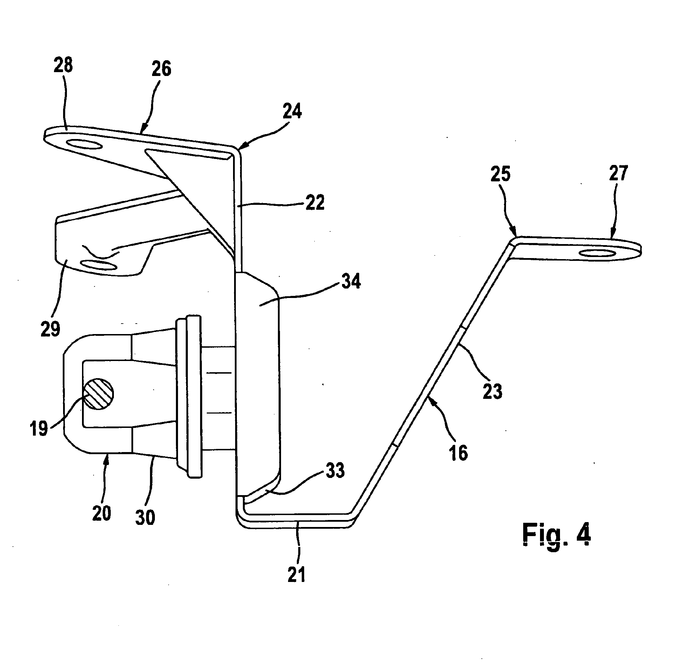

- Fig. 4: eine Ansicht in Pfeilrichtung B der Fig. 3

Von einem Kraftfahrzeug 1 ist lediglich eine Tür 2 dargestellt, die aufrechte Türrahmen 3 und 4 und einen Türkörper 5 aufweist. Der Türkörper 5 wird gebildet durch ein Türinnenteil 6 und ein Türaußenteil 7, die bspw. aus hochfestem nichtmetallischem Werkstoff wie glasfaserverstärktem Verbundwerkstoff - CFK - bestehen. Das Türinnenteil 6 ist im Längsschnitt gesehen trogförmig gestaltet und besitzt Stirnwände 8 und 9. Zwischen den Türrahmen 3 und 4 erstreckt sich eine Aufprallschutzvorrichtung 10, die zum Schutz von in einem Fahrgastraum 11 eines Aufbaus 12 des Kraftfahrzeugs 1 sich aufhaltenden Insassen gegen seitliche auf die Tür 2 einwirkende Unfallstöße vorgesehen ist.

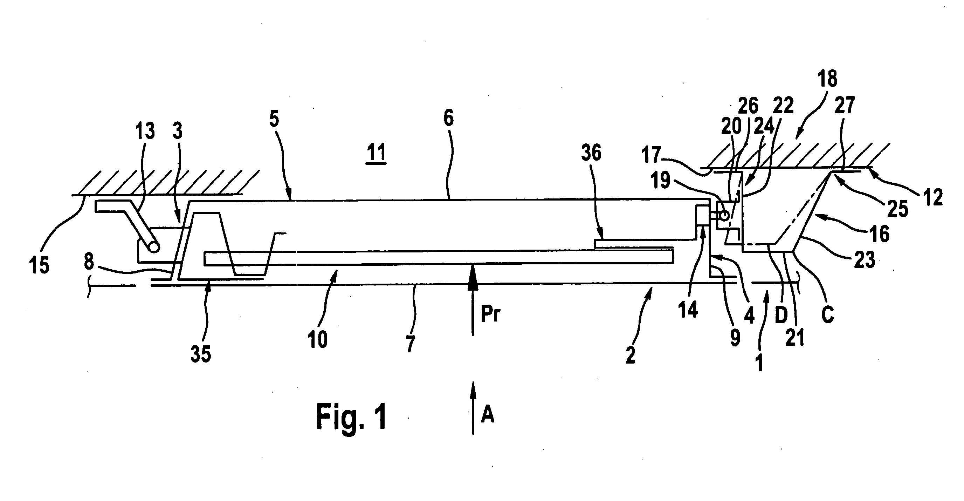

An der Aufprallschutzvorrichtung 10 sind einerseits Scharniere 13 und andererseits ein Schloss 14 befestigt, wobei die Scharniere 13 mit einer Scharniersäule 15 verbunden sind und das Schloss 14 mit einer Deformationseinrichtung 16 zusammenwirkt, die an einer weiteren Säule 17 in Lage gehalten wird. Die Scharniersäule 14 und die Säule 17 sind in eine Aufbaustruktur 18 des Aufbaus 12 integriert. Das Schloss 14 arbeitet im geschlossenen Zustand der Tür 2 - Fig. 1 - über ein Eingriffsmittel 19 mit einer Aufnahme 20 der Deformationseinrichtung 16 zusammen.

Die Deformationseinrichtung 16 ist nach Art eines Hutprofils ausgeführt, das mittels eines Stegs 21 verbundene erste und zweite Schenkel 22 und 23 aufweist, deren freie Enden 24 und 25 mit Stützstegen 26 und 27 versehen sind; letztere sind mit der Aufbaustruktur 18, die aus kohlefaseverstärktem Kunststoff bestehen kann, verbunden, wobei der erste Stützsteg 26 zur Erzielung einer definierten Abstützbasis mit einem oberen Arm 28 und einen unteren Arm 29 versehen ist. Am ersten Schenkel 22 ist die durch einen Bügel 30 dargestellte Aufnahme 20 für das Eingriffsmittel des Schlosses 14 befestigt. Außerdem sind an gegenüberliegen Enden 31 und 32 zumindest des ersten Schenkels 22 Abwinkelungen 33 und 34 vorgesehen, die sich festigkeitserhöhend auswirken.

Die mit den Stirnwänden 8 und 9 des Türinnenteils 6 durch Kleben, Schweißen oder dgl. verbundene Aufprallschutzvorrichtung 10 umfasst eine erste Konsole 35 und eine zweite Konsole 36, zwischen denen sich zwei als Rohre ausgebildete Abstützelemente 37 und 38 erstrecken. Dabei sind an der ersten Konsole 35 die Scharniere 13 und an der zweiten Konsole 36 das Schloss 14 angebracht. Die Konsolen 35 und 36 sowie die Abstützelemente 37 und 38 sind aus Metall hergestellt und als ein vorgefertigtes die Aufprallschutzvorrichtung 10 darstellendes Modul ausgebildet.

Bei einem havariebedingten seitliche Stoß auf die Aufprallschutzvorrichtung 10 bspw. in Pfeilrichtung Pr wirken Zugkräfte auf die Verbindung Eingriffsmittel 19 des Schlosses 14 und Aufnahme 20 der Deformationseinrichtung 16. Bei einem definierten Kraftniveau wird sich die Deformationseinrichtung 16 unter Energieabsorption verformen, und zwar in etwa wie aus Fig. 1 ersichtlich aus der Position C in die Position D. Allerdings verbleiben das Eingriffsmittel 19 und die Aufnahme 20 in Wirkverbindung, so dass die Insassen im Fahrgastraum 11 weitreichend geschützt sind.

## Patentansprüche

1. Aufprallschutzvorrichtung für eine Tür eines Kraftfahrzeugs, die sich zwischen aufrechten Türrahmen eines Türkörpers erstreckt und einerseits über Scharniere mit einer Scharniersäule und andererseits benachbart einem Schloss der Tür mit einer weiteren Säule verbunden ist, welche Scharniersäule und weitere Säule in eine Aufbaustruktur eines Aufbaus des Kraftfahrzeugs integriert ist, wobei das Schloss (14) an der Aufprallschutzvorrichtung (10) angebracht ist, **dadurch gekennzeichnet dass** im geschlossenen Zustand der Tür (2) ein Eingriffsmittel (19) der Tür (2) mit einer Aufnahme (20) einer Deformationseinrichtung (16) zusammenarbeitet, die an der weiteren Säule (17) der Aufbaustruktur ( 18) befestigt ist.

2. Aufprallschutzvorrichtung nach Anspruch 1, **dadurch gekennzeichnet, dass** die Deformationseinrichtung (16) nach Art eines Hutprofils ausgebildet ist, das mittels eines Stegs (21) verbundene erste und zweite (22 und 23) Schenkel umfasst, deren freie Enden (24 und 25) mit an der Aufbaustruktur (18) anliegenden Stützstegen (26 und 27) verbunden sind.

3. Aufprallschutzvorrichtung nach den Ansprüchen 1 und 2, **dadurch gekennzeichnet, dass** die Aufnahme (20) ein Bügel (30) ist, der am ersten Schenkel (22) befestigt ist.

4. Aufprallschutzvorrichtung nach einem oder mehreren der vorangehenden Ansprüche, **dadurch gekennzeichnet, dass** bis zu einer definierten Zugbelastung der Aufprallschutzeinrichtung (10) sich die Deformationseinrichtung (16) zwar verformt, jedoch das Eingriffsmittel (19) und die Aufnahme (20) in Wirkverbindung verbleiben.

5. Aufprallschutzvorrichtung, die benachbart von den aufrechten Türrahmen der Tür einerseits mit Scharnieren und andererseits mit dem Schloss versehen ist, nach einem oder mehreren der vorangehenden Ansprüchen, **dadurch gekennzeichnet, dass** die Scharniere (13) an einer ersten Konsole (35) und das Schloss (14) an einer zweiten Konsole (36) der Aufprallschutzvorrichtung (10) befestigt sind, wobei sich zwischen den Konsolen (35 und 36) zwei durch Rohre gebildete Abstützelemente (37 und 38) erstrecken.

6. Aufprallschutzvorrichtung mit einem Türkörper, der ein Türinnenteil mit Stirnwänden und ein TürauBenteil umfasst, nach Anspruch 5, **dadurch gekennzeichnet, dass** die Aufprallschutzvorrichtung (10) am Türinnenteil (6) befestigt, wobei die Konsolen (35 und 36) an den Stirnwänden (8 und 9) mit dem Türinnenteil (6) durch Schrauben, Kleben oder dgl. verbunden sind.

7. Aufprallschutzvorrichtung nach Anspruch 6, **dadurch gekennzeichnet, dass** zumindest das Türinnenteil (6) aus nicht metallischem hochfestem Werkstoff bspw. glasfaserverstärktem Verbundwerkstoff und die Aufprallschutzvorrichtung (10) im wesentlichen aus Metall besteht.

8. Aufprallschutzvorrichtung nach Anspruch 6, **dadurch gekennzeichnet, dass** die Konsolen (35 und 36) und die Abstützelemente (37 und 38) als ein vorgefertigtes die Aufprallschutzvorrichtung (10) darstellendes Modul ausgebildet sind.

## Claims

1. Impact protection device for a door of a motor vehicle, said impact protection device extending between upright door frames of a door body and being connected on one side via hinges to a hinge pillar and on the other side, adjacent to a lock of the door, to a further pillar, which hinge pillar and further pillar are integrated in a body structure of the motor vehicle body, wherein the lock (14) is provided on the impact protection device (10), **characterized in that,** in the closed state of the door (2), an engagement means (19) of the door (2) interacts with a receptacle (20) of a deformation device (16) which is fastened to the further pillar (17) of the body structure (18).

2. Impact protection device according to Claim 1, **characterized in that** the deformation device (16) is designed in the manner of a hat profile which comprises first and second limbs (22 and 23) which are connected by means of a web (21) and the free ends (24 and 25) of which are connected to supporting webs (26 and 27) bearing on the body structure (18).

3. Impact protection device according to Claims 1 and 2, **characterized in that** the receptacle (20) is a U-shaped element (30) which is fastened to the first limb (22).

4. Impact protection device according to one or more of the preceding claims, **characterized in that** the deformation device (16) is deformed, but the engagement means (19) and the receptacle (20) remain in operative connection, up to a defined tensile loading of the impact protection device (10).

5. Impact protection device which is provided, adjacent to the upright door frames of the door, on one side with hinges and on the other side with the lock, according to one or more of the preceding claims, **characterized in that** the hinges (13) are fastened to a first bracket (35) of the impact protection device (10) and the lock (14) is fastened to a second bracket (36) thereof, and two supporting elements (37 and 38) formed by tubes extend between the brackets (35 and 36).

6. Impact protection device with a door body which comprises an inside door part with end walls and an outside door part, according to Claim 5, **characterized in that** the impact protection device (10) is fastened to the inside door part (6), the brackets (35 and 36) being connected at the end walls (8 and 9) to the inside door part (6) by screwing, adhesive bonding or the like.

7. Impact protection device according to Claim 6, **characterized in that** at least the inside door part (6) is composed of non-metallic, high-strength material, for example glass-fibre-reinforced composite material, and the impact protection device (10) is substantially composed of metal.

8. Impact protection device according to Claim 6, **characterized in that** the brackets (35 and 36) and the supporting elements (37 and 38) are designed as a premanufactured module constituting the impact protection device (10).

## Revendications

1. Dispositif de protection contre les impacts pour une porte de véhicule automobile, qui s'étend entre le cadre de porte droit d'un corps de porte et qui est connecté d'une part par le biais de charnières à une colonne de charnière et d'autre part à proximité d'une serrure de la porte à une autre colonne, lesquelles colonne de charnière et autre colonne étant intégrées dans une structure de carrosserie d'une carrosserie du véhicule automobile, la serrure (14) étant montée sur le dispositif de protection contre les impacts (10), **caractérisé en ce que** dans l'état fermé de la porte (2), un moyen d'engagement (19) de la porte (2) coopère avec un logement (20) d'un dispositif de déformation (16), qui est fixé à l'autre colonne (17) de la structure de carrosserie (18).

2. Dispositif de protection contre les impacts selon la revendication 1, **caractérisé en ce que** le dispositif de déformation (16) est réalisé à la manière d'un profilé chapeau qui comprend des première et deuxième branches (22 et 23) connectées au moyen d'une nervure (21), dont les extrémités libres (24 et 25) sont connectées à des nervures de support (26 et 27) s'appliquant contre la structure de carrosserie (18).

3. Dispositif de protection contre les impacts selon les revendications 1 et 2, **caractérisé en ce que** le logement (20) est un arceau (30) qui est fixé sur la première branche (22).

4. Dispositif de protection contre les impacts selon l'une quelconque ou plusieurs des revendications précédentes, **caractérisé en ce que** jusqu'à une contrainte de traction définie du dispositif de protection contre les impacts (10), le dispositif de déformation (16) se déforme certes, mais le moyen d'engagement (19) et le logement (20) restent en liaison fonctionnelle.

5. Dispositif de protection contre les impacts, qui est pourvu, à proximité du cadre de porte droit de la porte, d'une part de charnières et d'autre part de la serrure, selon l'une quelconque ou plusieurs des revendications précédentes, **caractérisé en ce que** la charnière (13) est fixée à une première console (35) et la serrure (14) à une deuxième console (36) du dispositif de protection contre les impacts (10), deux éléments de support (37 et 38) formés par des tubes s'étendant entre les consoles (35 et 36).

6. Dispositif de protection contre les impacts comprenant un corps de porte qui comprend une partie intérieure de porte avec des parois frontales et une partie extérieure de porte, selon la revendication 5, **caractérisé en ce que** le dispositif de protection contre les impacts (10) est fixé sur la partie intérieure de porte (6), les consoles (35 et 36) étant connectées au niveau des parois frontales (8 et 9) à la partie intérieure de porte (6) par vissage, collage ou similaire.

7. Dispositif de protection contre les impacts selon la revendication 6, **caractérisé en ce qu'**au moins la partie intérieure de porte (6) se compose d'un matériau de grande résistance non métallique ou d'un matériau composite renforcé par des fibres de verre et le dispositif de protection contre les impacts (10) se compose essentiellement de métal.

8. Dispositif de protection contre les impacts selon la revendication 6, **caractérisé en ce que** les consoles (35 et 36) et les éléments de support (37 et 38) sont réalisés sous forme de module préfabriqué constituant le dispositif de protection contre les impacts (10).
